# EUROPEAN PATENT APPLICATION

(11) **EP 1 862 896 A2**
(43) Date of publication of application: **05.12.2007**
(21) Application number: 07102906.0
(22) Date of filing: 22.02.2007
(51) Int. Cl.: G06F 3/12

(54) **Setting network ports**

(30) Priority: 30.05.2006 KR 20060048681
(71) Applicant: Samsung Electronics Co., Ltd., Suwon-si, Gyeonggi-Do 442-742 (KR)
(72) Inventor: Lee, Sang-min, Gyeonggi-do (KR); Hwang, Tae-kyung, Gyeonggi-do (KR)
(74) Representative: Walaski, Jan Filip

(57) **Abstract**

A user terminal, an image forming device and a network port setting method thereof. The user terminal includes a network searching unit to search an image forming device connected to the user terminal through a network, a driver searching unit to search preinstalled driver information, an information collecting unit to collect predetermined information related to the searched image forming device to create a pertinent information list, and to create an image forming device list on the basis of the searched driver information, and a port setting unit to set a network port selected on the pertinent information list to an image forming device selected on the image forming device list.

## Description

The present invention relates generally to a user terminal, an image forming device and a network port setting method thereof, which are capable of easily setting a network port.

With office automation, use of various input and output machines is increasing. The various input and output machines, such as laser beam printers, LED print head (LPH) printers, copy machines, and facsimiles, are called image forming devices.

A general image forming device is formed to have a single function in an apparatus, such as a printer, a copy machine, a scanner, or a facsimile. However, with a development of digital techniques, a multi-function machine formed to have various functions in an apparatus has also appeared.

In general, one image forming device and one user terminal apparatus are connected and used locally. However, with the development of networks, such as a local area network (LAN), it is possible that one or a plurality of user terminal apparatuses and one or a plurality of image forming devices are connected and used through the network.

In a system in which one or a plurality of user terminal apparatuses and one or a plurality of image forming devices are connected as described above, a user may select and use a particular image forming device from among the plurality of image forming devices.

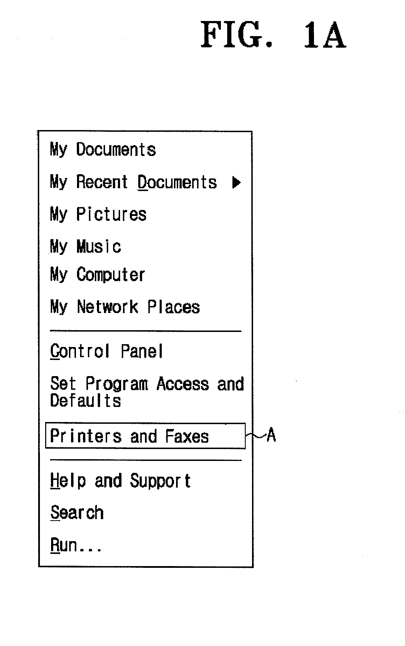

However, in order to use the image forming devices connected through the network, the user must set a network port of the image forming device that the user wants to use. This will be described with reference to FIGS. 1A through 1D.
FIGS. 1A through 1D are views illustrating a conventional network port setting method.

If a user desires to set a network port of an image forming device on an operation system, for example, Windows, the user selects a "Printer and Faxes" menu A at a "Start-UP" folder, as illustrated in FIG. 1A.

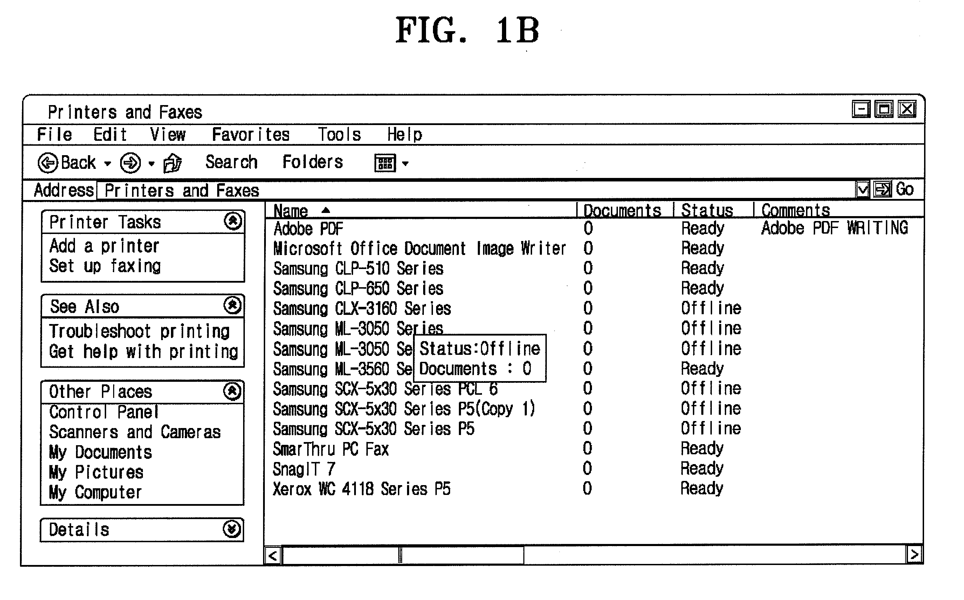

When the "Printer and Faxes" menu A is selected, a setting pane of the "Printer and Faxes menu" is displayed, as illustrated in FIG. 1B. A list of all the image forming devices connected to a user terminal apparatus is displayed in the setting pane of the "Printer and Faxes" menu A.

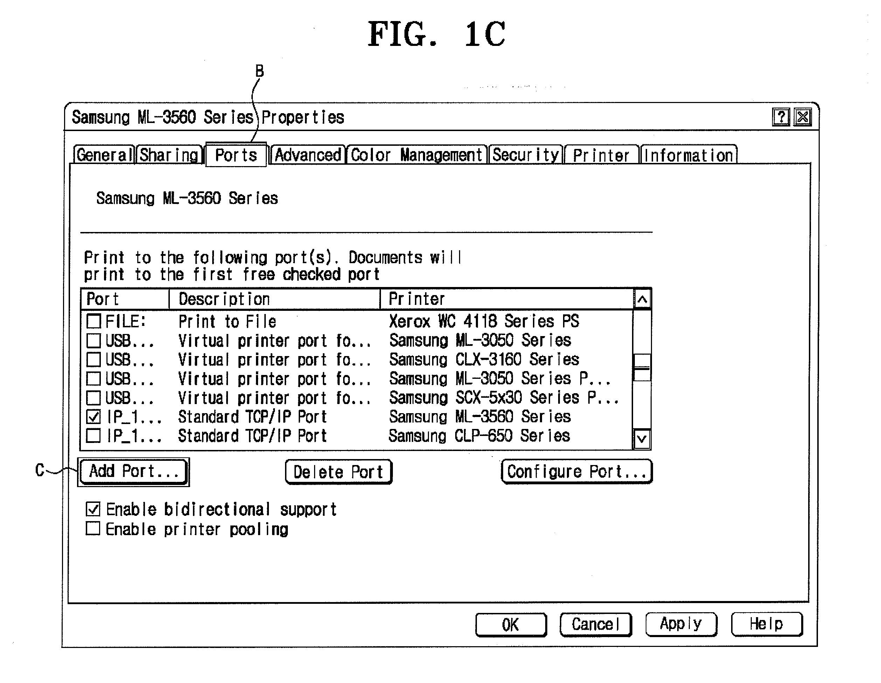

The user selects the image forming device desired to set the network port through the setting pane of the "Printer and Faxes" menu A, and activates a "Properties" pane of the selected image forming device, as illustrated in FIG. 1C.

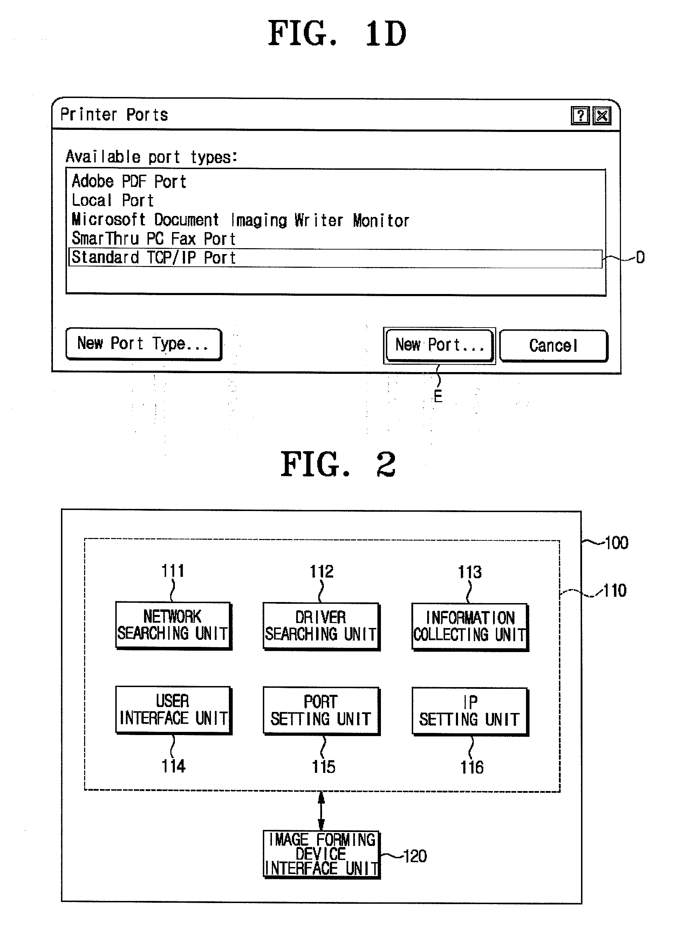

The "Properties" pane of the selected image forming device illustrated in FIG. 1C includes tabs, such as "General", "Sharing", "Ports", "Advanced", "Color Management", "Security", "Printer", and "Information". Here, when an "Add Port..." button C is clicked after a "Ports" tab B is selected, a "Printer Ports" pane is displayed, as illustrated in FIG. 1D.

After a "Standard TCP/IP Port" D is selected at the "Printer Ports" pane illustrated in FIG. 1D, a "New Port..." button E is clicked. With the operation as described above, a network port adding wizard is executed. Thereafter, according to the network port adding wizard, the network port is set.

As described above, to set the network port of the image forming device, the user has to carry out many selecting processes. The several selecting processes are carried out through the setting panes illustrated in FIGS. 1A through 1D, but even after the network port adding wizard executes, several selecting processes may still be required by the system.

The selecting processes as described above may be tedious work to experts, but recognized as very difficult work to general users and novices.

According to the present invention, there is provided a user terminal apparatus, an image forming device and a network port setting method thereof, which set a network port providing a pertinent information list and an image forming device list to a user, thereby allowing the network port to be easily set.

Additional aspects and utilities of the present invention will be set forth in part in the description which follows and, in part, will be obvious from the description, or may be learned by practice of the invention.

The foregoing and/or other aspects and utilities of the present invention may be achieved by providing a user terminal apparatus including a network searching unit to search an image forming device connected to the user terminal apparatus through a network, a driver searching unit to search preinstalled driver information, an information collecting unit to collect predetermined information related to the searched image forming device to create a pertinent information list, and to create an image forming device list on the basis of the searched driver information, and a port setting unit to set a network port selected from the pertinent information list to the image forming device selected from the image forming device list.

The apparatus may further include a user interface unit to display the pertinent information list and the image forming device list, and to receive a select signal for the network port and the image forming device to be set through the pertinent information list and the image forming device list, which are displayed.

The predetermined information may include at least one of an IP address, a model name, and a name of the searched image forming device, as well as a number corresponding to the other image forming devices connected with other user terminal apparatuses, which use the searched image forming device.

The information collecting unit may collect the predetermined information by using one of a simple network management protocol (SNMP) and a transmission control protocol/internet protocol (TCP/IP).

The user interface unit may display the pertinent information list on a first side of an indicating picture, and the image forming device list on a second side of the indicating picture.

Through the indicating picture, a user may drag a network port to be set on the pertinent information list, and drop the dragged network port onto the image forming device to be set on the image forming device list.

The user interface unit may provide the indicating picture, so that when pertinent information is selected from the pertinent information list, the image forming device compatible with the network port corresponding to the selected pertinent information is activated on the image forming device list.

The apparatus may further include an IP setting unit to receive an IP address inputted by a user, and to set a network port by the inputted IP address, when the network port selected from the pertinent information list is ineffective.

When a network re-searching request signal is inputted, the network searching unit may re-search an image forming device connected to the user terminal apparatus through the network.

The foregoing and/or other aspects and utilities of the present invention may also be achieved by providing a network port setting method of a user terminal apparatus, the method including searching an image forming device connected to the user terminal apparatus through a network, searching preinstalled driver information, collecting predetermined information related to the searched image forming device to create a pertinent information list, creating an image forming device list on the basis of the searched driver information, displaying the pertinent information list and the image forming device list created, and setting a network port selected from the pertinent information list to the image forming device selected from the image forming device list.

The predetermined information may include an IP address, a model name, and a name of the searched image forming device, as well as a number corresponding to the other image forming devices connected with other user terminal apparatuses, which use the image forming device.

The collecting of the predetermined information may include collecting the predetermined information by using one of a simple network management protocol (SNMP) and a transmission control protocol/internet protocol (TCP/IP).
The displaying of the pertinent information list and the image forming device list may include displaying the pertinent information list a first side of an indicating picture, and the image forming device list on a second side of the indicating picture. The setting of the network port may include dragging a network port to be set on the pertinent information list, and dropping the dragged network port onto an image forming device to be set on the image forming device list.

The displaying of the pertinent information list and the image forming device list may include providing the indicating picture, so that when pertinent information is selected from the pertinent information list, only an image forming device compatible with the network port corresponding to the selected pertinent information is activated as the image forming device on the image forming device list.

The method may further include receiving an IP address inputted by a user and setting a network port by the inputted IP address, when the network port selected from the pertinent information list is ineffective.

The method may further include re-searching another image forming device connected to the user terminal apparatus through the network when a network re-searching request signal is inputted.

The foregoing and/or other aspects and utilities of the present invention may also be achieved by providing an image forming device connected through a network to a plurality of user terminal apparatuses, including a storing unit to store pertinent information of the user terminal apparatuses, and a control unit to control the storing unit, so that whenever there is a connection request for adding a network port from each of the user terminal apparatuses, the storing unit stores an IP address of the requesting user terminal apparatus and a number representing a connection request.

The device may further include a terminal apparatus interface unit to support an interface to the user terminal apparatuses, and when there is an information request from each of the user terminal apparatuses, the control unit may confirm a connection state of the user terminal apparatuses corresponding to IP addresses stored in the storing unit, and transfer the confirmed connection state and the connection request information to the requesting user terminal apparatus through the terminal apparatus interface unit.

The foregoing and/or other aspects and utilities of the present invention may also be achieved by providing a network port setting method of an image forming device, the method including storing an IP address of the requesting user terminal apparatus and a number representing a connection request when there is a connection request for adding a network port from each of a plurality of user terminal apparatuses, confirming a connection state of user terminal apparatuses corresponding to stored IP addresses when there is an information request from each of the user terminal apparatuses, and transferring the confirmed connection state , the stored IP addresses and the number representing thethe connection request to the requesting user terminal apparatus.

The foregoing and/or other aspects and utilities of the present invention may also be achieved by providing a computer readable recording medium containing computer readable codes as a program to perform a network port setting method, the method including storing an IP address of the requesting user terminal apparatus and a number corresponding to the connection request when there is a connection request for adding a network port from each of a plurality of user terminal apparatuses, confirming a connection state of user terminal apparatuses corresponding to stored IP addresses, and transferring the confirmed connection state, the stored IP addresses and the number corresponding to the connection request to the requesting user terminal apparatus when there is an information request from each of the user terminal apparatuses.

The foregoing and/or other aspects and utilities of the present invention may also be achieved by providing a user terminal apparatus including an information collecting unit to collect information relating to one or more image forming devices to create a pertinent information list, and to collect information relating to one or more preinstalled drivers to create an image forming device list, and a user interface unit to generate a signal representing a first image of the pertinent information list and a second image of the image forming device list.

The user terminal apparatus may further include a display to display the first image and the second image within a screen thereof.

The user terminal apparatus may further include a port setting unit to set a network port of one of the drivers of the image forming device list according to a selected one of the image forming devices of the pertinent information list.

The user terminal apparatus may further include a network searching unit to search the one or more image forming devices connected through a network, and a driver searching unit to search the one or more drivers installed therein.

The user interface unit may generate the signal including a cursor to connect one of the one or more drivers of the image forming device list and one of the one or more image forming devices of the pertinent information list to set a network port selected from the pertinent information list to one of the drivers of the image forming device list.

The foregoing and/or other aspects and utilities of the present invention may also be achieved by providing a user terminal apparatus, including a searching unit to search to search for one or more image forming devices connected to a network and one or more drivers installed therein, an information collecting unit to create a pertinent information list from the search image forming devices and an image forming device list from the searched one or more drivers, an interface unit to generate a signal representing a first image of the pertinent information list and a second image of the image forming device list to be displayed on a screen, and a port setting unit to set a network port selected from the displayed pertinent information list to one of the drivers selected from the displayed image forming device list.

The foregoing and/or other aspects and utilities of the present invention may also be achieved by providing a user interface apparatus to set a network port based on a status of a selected network port to an image forming device, including a port setting unit to automatically set the network port to the image forming device when the selected network port is effective, and an IP setting unit to set the network port with an IP address input by a user when the network port is ineffective.

The foregoing and/or other aspects and utilities of the present invention may also be achieved by providing a network port setting method based on a status of a selected network port, including automatically setting the network port to an image forming device when the selected network port is effective, and setting the network port with an IP address input by a user when the network port is ineffective.

These and/or other aspects and utilities of the present invention will become apparent and more readily appreciated from the following description of the embodiments, taken in conjunction with the accompanying drawings in which:
FIGS. 1A through 1D are views illustrating a conventional network port setting method;
FIG. 2 is a block diagram illustrating a user terminal apparatus according to an embodiment of the present invention;
FIG. 3 is a view illustrating a state of displaying a pertinent information list and an image forming device list in the user terminal apparatus of FIG. 2;
FIG. 4 is a view illustrating a network port setting method;
FIG. 5 is a view illustrating the network port setting method of FIG. 4 when an IP address is effective;
FIGS. 6A and 6B are views illustrating the network port setting method of FIG. 4 when the IP address is ineffective;
FIG. 7 is a block diagram illustrating an image forming device according to an embodiment of the present invention;
FIG. 8 is a flow chart illustrating a network port setting method of a user terminal apparatus according to an embodiment of the present invention; and
FIG. 9 is a flow chart illustrating a network port setting method of an image forming device according to an embodiment of the present invention.

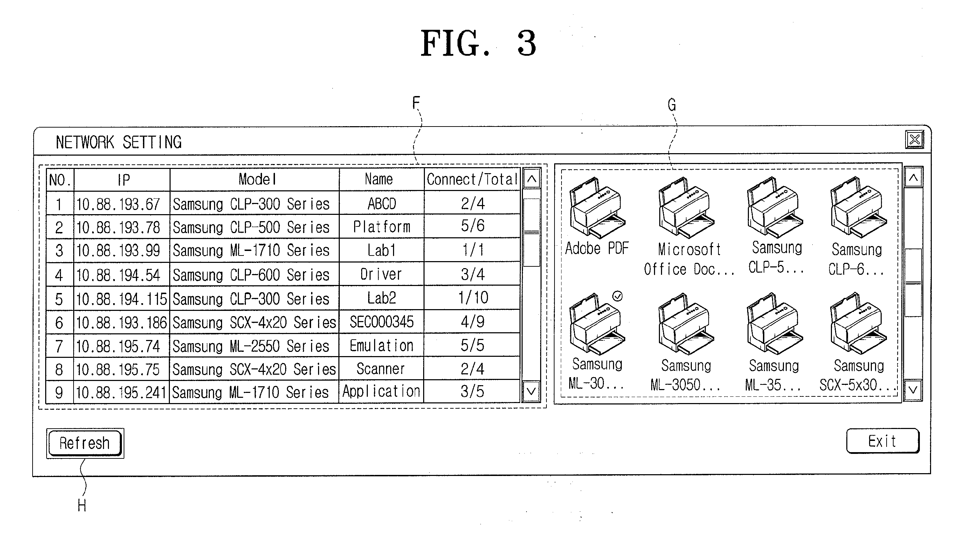

FIG. 2 is a block diagram illustrating a user terminal apparatus 100 according to an embodiment of the present invention, and FIG. 3 is a view illustrating a state of displaying a pertinent information list and an image forming device list in the user terminal apparatus 100 of FIG. 2.

Referring to FIG. 2, the user terminal apparatus 100 includes a port changing unit 110, and an image forming device interface unit 120. Also, software including an operating system (OS) and various driver application programs are installed in the user terminal apparatus 100.

The port changing unit 110 includes a network searching unit 111, a driver searching unit 112, an information collecting unit 113, a user interface unit 114, a port setting unit 115, and an IP setting unit 116.

The network searching unit 111 searches for an image forming device connected to the user terminal apparatus 100 through a network. Here, the image forming device may be a single general printer or a plurality of general printers.

When a user inputs a network re-searching request signal through the user interface unit 114, the network searching unit 111 re-searches for the image forming device connected to the user terminal apparatus 100 through the network.

The driver searching unit 112 searches for driver information installed in the OS of the user terminal apparatus 100 in advance. Accordingly, image forming devices set in the user terminal apparatus 100 may be detected.

The information collecting unit 113 collects predetermined information related to the image forming device identified by the network searching unit 111 to create a pertinent information list, and creates an image forming device list on the basis of the driver information identified by driver searching unit 112. At this time, it is possible, but not necessary, to create the image forming device list in the form of icons.

The predetermined information collected by the information collecting unit 113 includes an IP address, a model name, and a name of the image forming device, which is connected to the network, and a number of other image forming devices connected with other user terminal apparatuses which use the image forming device. To collect the predetermined information as described above, the information collecting unit 113 may use a simple network management protocol (SNMP) or a transmission control protocol/internet protocol (TCP/IP).

The user interface unit 114, which supports an interface between the port changing unit 110 and the user, provides the image forming device list and the pertinent information list created by the information collecting unit 113 to the user, and receives a select signal for the network port and the image forming device to be set from the user.

Referring to FIG. 3, the user interface unit 114 provides an indicating picture including the pertinent information list F and the image forming device list G, so that the user may easily confirm them. At this time, it is possible, but not necessary, to display the pertinent information list F on a first side of the indicating picture, and to display the image forming device list G on a second side of the indicating picture.

Also, the pertinent information list F on the first side of the indicating picture may be embodied to be dragged by a mouse operation of the user, and the image forming device list G on the second side of the indicating picture is displayed in the shape of icons.

As illustrated in FIG. 3, in addition to the pertinent information list F and the image forming device list G, the indicating picture, which is provided at the user interface unit 114, further includes a refresh button H, which inputs a network re-searching request signal to re-search the network when there is no desired information in the pertinent information list F.

If the network port selected by the user is effective, the port setting unit 115 sets the selected network port to the selected image forming device according to the select signal of the user inputted through the user interface unit 114.

If the selected network port is ineffective, the IP setting unit 116 receives an IP address through the user interface unit 114 from the user and sets a network port by the inputted IP address, according to the select signal of the user inputted through the user interface unit 114.

The image forming device interface unit 120 supports an interface between the image forming and the user terminal apparatus 100. The network searching unit 111 may search for the image forming device connected to the network, through the image forming device interface unit 120.

According to the present embodiment, the port changing unit 110 may be embodied in an application program only for port changing, or a driver having an additional function for port changing.

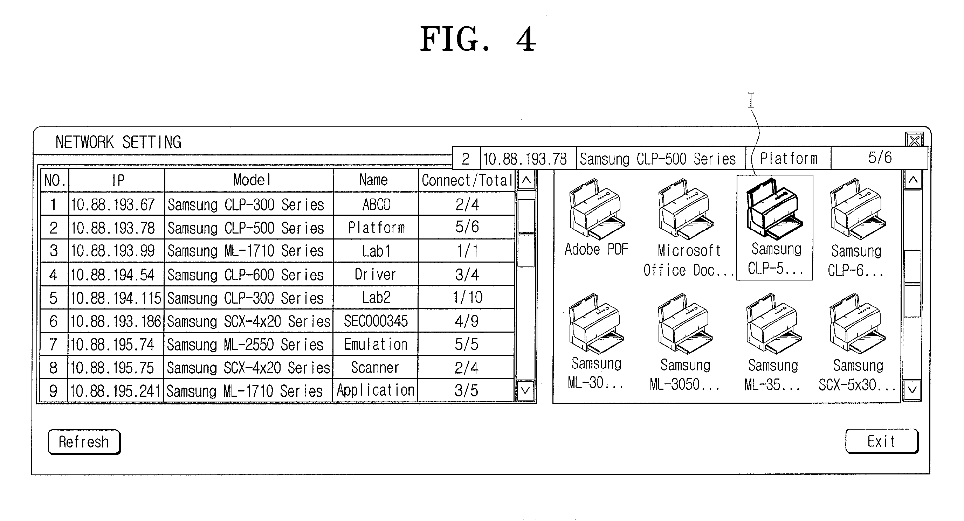

FIG. 4 is a view illustrating a network port setting method.

Referring to FIGS. 2, 3, and 4,, the indicating picture, which is provided at the user interface unit 114, includes the pertinent information list F, the image forming device list G, and the refresh button H.

On the indicating picture, the user selects one IP address which the user wants to set among the related information list F, by using the mouse. FIG. 4 assumes that the user selects "10.88.193.78".

When the user selects "10.88.193.78" from the pertinent information list F, only an icon, which corresponds to an image forming device compatible with "10.88.193.78" among the image forming devices in the form of icons indicated on the image forming device list, is activated. In the exemplary embodiment of the present invention, for clarity and conciseness, one icon is illustrated as activated, but the present invention is not limited to that. For example, more than one icon may be activated.

The user drags "10.88.193.78" by using the mouse, and moves and drops the dragged "10.88.193.78" onto the activated icon I. With this operation, a select signal for the network port and the image forming device that the user wants to set is inputted through the user interface unit 114. After drag and drop operation of the user by the mouse, the port setting unit 115 sets the network port.

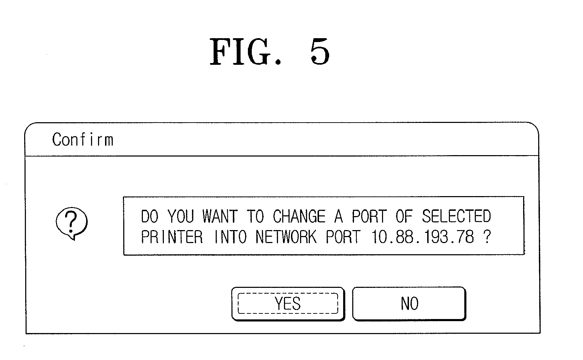

FIG. 5 is a view illustrating a network port setting method when the IP address is effective.

Referring to FIGS. 2-5, when the select signal for the network port and the image forming device is inputted with the drag and drop operation of the user by the mouse, the port setting unit 115 may determine whether the network port selected by the user is effective.

If the selected network port is effective, the port setting unit 115 may display a message which confirms whether the user wants to change the port of the image forming device into the selected network port through the user interface unit 114 prior to setting the selected network port.

FIG. 5 illustrates a message for confirming whether the selection made by the user is correct. As illustrated in the drawing, the port setting unit 115 may display the message "Do you want to change a port of the selected printer into the network port 10.88.193.78 ?", so that the user confirms the selected network port. If the user clicks "Yes", the selected port is set. If the user clicks "No", the above process repeats.

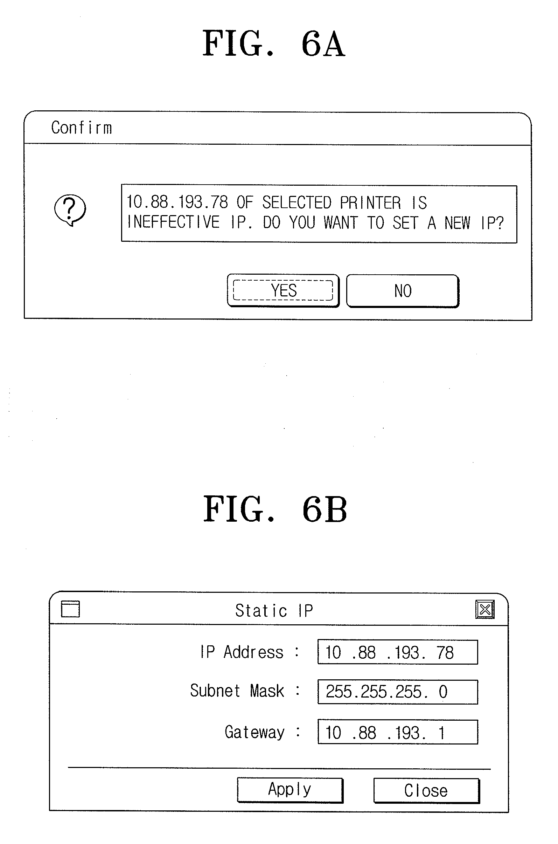

FIGS. 6A and 6B are views illustrating a network port setting method when the IP address is ineffective.

Referring to FIGS 2-6B, when the select signal for the network port and the image forming device is inputted with the drag and drop by the mouse operation of the user, the port setting unit 115 may determine whether the network port selected by the user is effective.

At this time, if the selected network port is ineffective, the user interface unit 114 may display a message which induces the user to directly set an IP address.
As illustrated in FIG. 6A, the user interface unit 114 may display the message "10.88.193.78 of the selected printer is ineffective IP. Do you want to set a new IP?".

If the user has determined to set a new IP at FIG. 6A, the IP setting unit 116 provides an input pane which is capable of directly inputting the new IP as illustrated in FIG. 6B, through the user interface unit 114. After that, the IP setting unit 116 sets the network port with the IP address inputted through the input pane by the user.

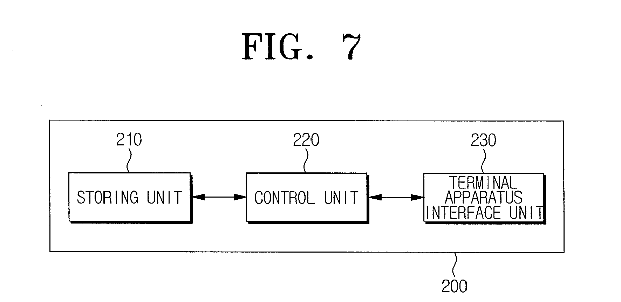

FIG. 7 is a block diagram illustrating an image forming device 200 according to an embodiment of the present invention.

Referring to FIG. 7, the image forming device 200 includes a storing unit 210, a control unit 220, and a terminal apparatus interface unit 230. Also, the image forming device 200 further includes a printing unit under the control of the control unit 220, which is necessary to form a desired image. That is, the image forming device 200 prints the desired image according to signals transmitted from the user terminal apparatus 100 through the set network port. However, since functions and constructions of the printing unit are the same as those of the conventional printing unit, descriptions thereof are omitted for clarity and conciseness. Furthermore, the image forming device 200 is connected to a plurality of user terminal apparatuses through a network.

The storing unit 210 stores pertinent information of the plurality of user terminal apparatuses under the control of the control unit 220. Here, the pertinent information stored in the storing unit 210 is information related to each of the plurality of user terminal apparatuses.

The control unit 220, which controls a general operation of the image forming device 200, controls signal inputs and signal outputs to the storing unit 210 and the terminal apparatus interface unit 230.

Whenever there is a connection request to add a network port from one of the plurality of user terminal apparatuses, the control unit 220 controls the storing unit 210 to store an IP address of the requesting user terminal apparatus and a connection request number.

If there is an information request from one of the user terminal apparatuses, i.e., the user terminal apparatus 100, the control unit 220 confirms a present connection state of the plurality of user terminal apparatuses corresponding to IP addresses stored in the storing unit 210.

The control unit 220 transfers the confirmed connection state of the plurality of user terminal apparatuses and the pertinent information stored in the storing unit 210 to the user terminal apparatus 100 through the terminal apparatus interface unit 230.

The terminal apparatus interface unit 230, which supports an interface between the plurality of user terminal apparatuses and the image forming device 200, receives information requests from the plurality of user terminal apparatuses and transfers the confirmed connection state and the pertinent information under the control of the control unit 220.

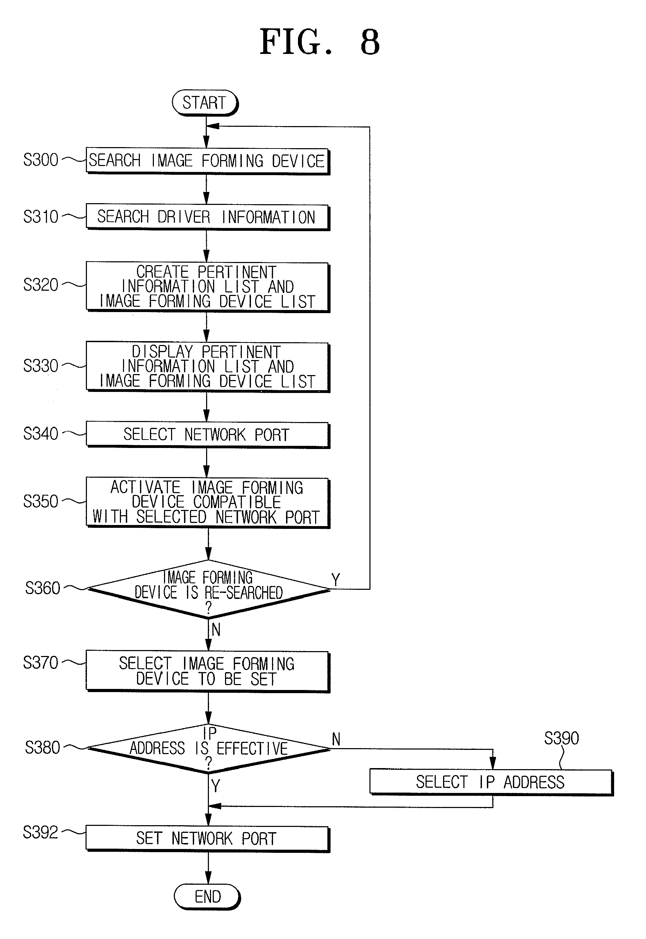

FIG. 8 is a view illustrating a network port setting method of a user terminal apparatus according to an embodiment of the present invention.

The network port setting method of the user terminal apparatus according to an embodiment of the present invention will now be described with reference to FIGS. 2 through 8.

The network searching unit 111 searches for an image forming device connected to the user terminal apparatus 100 through the network (S300), and the driver searching unit 112 searches driver information through drivers installed in the OA of the user terminal apparatus 100 (S310).

The information collecting unit 113 collects pertinent information of the image forming device identified through the network searching unit 111 to create a pertinent information list, and creates an image forming device list using the driver information identified by the driver searching unit 112 (S320).

When the creation of the pertinent information list and the image forming device list by the information collecting unit 113 is completed, the user interface unit 114 displays an indicating picture including the pertinent information list and the image forming device list as illustrated in FIG. 3 (S330).

The user moves the mouse on the pertinent information list of the indicating picture displayed through the user interface unit 114, to select a desired network port to set (S340).

When the user selects one network port, only an image forming device in the form of an icon compatible with the selected network port is activated on the indicating picture of the user interface unit 114, as illustrated in FIG. 4 (S350).

If the selected network port and the activated image forming device do not satisfy the user, the user may select the refresh button H to re-search for an image forming device connected to the network. When a network re-searching request signal is inputted by the refresh button H (S360-Y), the network searching unit 111 re-searches the image forming device connected to the network, and repeats the operations after the operation S300.

If the selected network port and the activated image forming device satisfy the user (S360-N), the user drags the corresponding network port on the pertinent information list and drops the dragged network port onto the icon of the activated image forming device, as illustrated in FIG. 4 (S370).

If the network port selected by the user is effective (S380-Y), the port setting unit 115 sets the network port of the corresponding image forming device with the selected IP address (S392).

If the network port selected by the user is effective (S380-N), the IP setting unit 116 directly receives an IP address through the user interface unit 114 from the user (S390), and then sets the network port of the corresponding image forming device with the received IP address (S392).

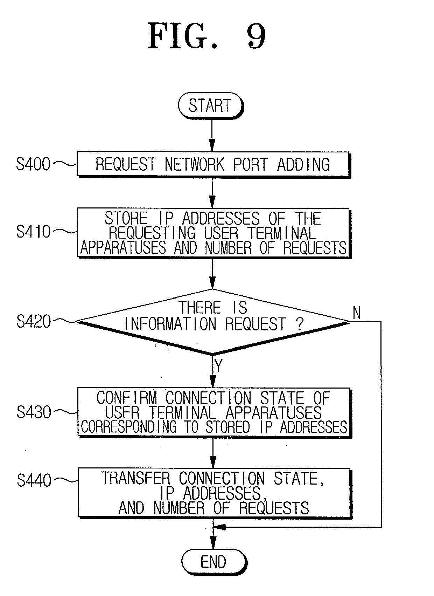

FIG. 9 is a flow chart illustrating a network port setting method of an image forming device according to an embodiment of the present invention.

Here, the network port setting method of the image forming device according to an exemplary embodiment of the present invention will now be described with reference to FIGS. 2 through 9.

When requests for adding a network port are input from the plurality of user terminal apparatuses (S400), the control unit 220 of the image forming device 200 controls the storing unit 210 to store the number of the requests together with IP addresses of the requesting user terminal apparatuses (S410).

If there is an information request from one of the user terminal apparatuses, i.e., the user terminal apparatus 100 (S420-Y), the control unit 220 confirms a connection state of the plurality of user terminal apparatuses corresponding to IP addresses stored in the storing unit 210 (S430).

Subsequently, the control unit 220 transfers the connection state of the user terminal apparatuses, the IP addresses of the user terminal apparatuses, and the number of the requests through the terminal apparatus interface unit 230 (S440). With the process as described above, the network searching unit 111 of the user terminal apparatus 100 may search the plurality of image forming devices 200 by the connection state of the plurality of user terminal apparatuses, the IP addresses of the user terminal apparatuses, and the number of the requests transferred from the image forming devices 200. The information collecting unit 113 may then collect the pertinent information.

The present invention can also be embodied as computer-readable codes on a computer-readable recording medium. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present invention can be easily construed by programmers skilled in the art to which the present invention pertains.

As apparent from the foregoing description, according to an exemplary embodiment of the present invention, the user terminal apparatus, the image forming device, and the network port setting method thereof set the network port with the drag and drop method, thereby allowing the network port to be easily and conveniently set as compared with the convention apparatus and method.

Also, according to an exemplary embodiment of the present invention, the image forming device has the information on the user terminal apparatuses, which have connected to itself. Accordingly, the user terminal apparatus connected to the network may easily detect the frequency in use of the certain image forming device, thereby allowing the image forming device having the small frequency in use to be selected and used.

Although a few embodiments of the present invention have been shown and described, it will be appreciated by those skilled in the art that changes may be made in these embodiments without departing from the principles of the invention, the scope of which is defined in the appended claims.

## Claims

1. A user terminal comprising:
means for searching for image forming devices connected to the user terminal through a network;
means for searching for driver information installed in the user terminal;
means for collecting information associated with the image forming devices identified by the searching means to create a list of the associated information, and for creating a list of image forming devices on the basis of the installed driver information; and
means for setting a network port selected from the associated information list for an image forming device selected from the image forming device list.

2. The user terminal of claim 1, further comprising:
a user interface means for displaying the associated information list and the image forming device list and for receiving a select signal for selecting the network port from the displayed information list and for selecting the image forming device for which the network port is to be set.

3. The user terminal of claim 2, wherein the user interface means is arranged to display the information list on a first side of a display, and the image forming device list on a second side of the display.

4. The user terminal of claim 3, wherein the user interface means is arranged so that when information is selected from the information list, the image forming device compatible with the network port corresponding to the selected information is activated on the image forming device list.

5. The user terminal according to any one of the preceding claims, wherein the information associated with an image forming device comprises:
at least one of an IP address, a model name and a name of the image forming device; and
the number of such image forming devices which are connected to other user terminals.

6. The user terminal of any one of the preceding claims, wherein the means for collecting information is arranged to collect the information by using one of a simple network management protocol (SNMP) and a transmission control protocol/internet protocol (TCP/IP).

7. The user terminal of any one of the preceding claims, further comprising:
means for receiving an IP address input by a user; and arranged to set a network port using the input IP address when the network port selected from the associated information list is ineffective.

8. The user terminal of any one of the preceding claims, arranged to search for another image forming device connected to the user terminal through the network when a re-search request signal is received.

9. A method of setting a network port for a user terminal, the method comprising:
searching for image forming devices connected to the user terminal through a network;
searching for driver information installed in the user terminal;
collecting information associated with the image forming devices identified by the searching means, and creating a list of the associated information;
creating a list of image forming devices on the basis of the installed driver information;
displaying the associated information list and the image forming device list; and
setting a network port selected from the associated information list for an image forming device selected from the image forming device list.

10. The method of claim 9, wherein the displaying of the associated information list and the image forming device list comprises:
displaying the associated information list on a first side of the display; and
displaying the image forming device list on a second side of the display.

11. The method of claim 9 or 10, wherein the setting of the network port comprises:
dragging a selected network port from the associated information list; and
dropping the dragged network port onto an image forming device on the image forming device list.

12. The method of claim 11, in which selecting information from the information list causes an image forming device compatible with the network port corresponding to the selected information to be activated on the image forming device list.

13. The method of any one of claims 9 to 12, wherein the associated information comprises:
an IP address, a model name, and a name of the searched image forming device; and
the number of such image forming devices which are connected to other user terminals.

14. The method of any one of claims 9 to 13, wherein the collecting of the associated information comprises:
collecting the associated information by using one of a simple network management protocol (SNMP); and
a transmission control protocol/internet protocol (TCP/IP).

15. The method of any one of claims 9 to 14, further comprising:
receiving an IP address input by a user; and
setting a network port using the input IP address when the network port selected from the associated information list is ineffective.

16. The method of any one of claims 9 to 15, further comprising:
re-searching for an image forming device connected to the user terminal through the network when a network re-searching request signal is input.

17. An image forming device connected to a plurality of user terminals through a network, comprising:
a storing unit to store information associated with the user terminals; and
a control unit to control the storing unit, so that whenever there is a connection request from one of the user terminals to add a network port, the storing unit is arranged to store an IP address of the requesting user terminal and a number representing the connection request.

18. The image forming device of claim 17 further comprising:
a user terminal interface unit for supporting an interface to the user terminal; and
wherein the control unit is arranged to confirm a connection state of a first user terminals corresponding to an IP address stored in the storing unit when there is an information request from a second user terminal, and the control unit is arranged to transfer the confirmed connection state and the information associated with the first user terminal to the second user terminal through the user terminal interface unit.

19. A network port setting method for an image forming device connected to a plurality of user terminals through a network, the method comprising:
storing a first IP address of a user terminal making a connection request to add a network port
confirming a connection state of a first user terminal when a request for information is received from a second user terminal; and
transferring the confirmed connection state, the stored IP address and the number corresponding to the connection request to the second user terminal.

20. A computer program which, when executed by a processor, is arranged to perform the method of any one of claims 9 to 16, or 19.

21. A user terminal comprising:
an information collecting means for collecting information relating to one or more image forming devices to create an information list, and for collecting information relating to one or more preinstalled drivers to create an image forming device list; and
a user interface means for generating a signal representing a first image of the information list and a second image of the image forming device list.

22. The user terminal of claim 21, further comprising:
a display for displaying the first image and the second image on a screen.

23. The user terminal of claim 21 or 22, further comprising:
a port setting means for setting a network port for one of the drivers of the image forming device list according to a selected one of the image forming devices of the information list.

24. The user terminal of any one of claims 21 to 23, further comprising;
a network searching means for searching the one or more image forming devices connected through a network; and
a driver searching means for searching the one or more drivers installed therein.

25. The user terminal of any one of claims 21 to 24, wherein the user interface means is arranged to generate a signal including a cursor to connect one of the one or more drivers of the image forming device list and one of the one or more image forming devices of the information list to set a network port selected from the information list to one of the drivers of the image forming device list.

26. A user interface for enabling a network port of a user terminal to be set based on a status of a selected network port for an image forming device, comprising:
a port setting means for automatically setting the network port for the image forming device when the selected network port is effective; and
an IP setting means for setting the network port with an IP address input by a user when the network port is ineffective.

27. A method of setting a network port based on a status of a selected network port, comprising:
automatically setting the network port to an image forming device when the selected network port is effective; and
setting the network port with an IP address input by a user when the network port is ineffective.
